# EUROPÄISCHE PATENTSCHRIFT

(11) **EP 1 656 505 B1**
(45) Veröffentlichungstag und Bekanntmachung des Hinweises auf die Patenterteilung: **21.03.2007**
(21) Anmeldenummer: 04741810.8
(22) Anmeldetag: 16.06.2004
(51) Int. Cl.: F16B 2/00

(54) **BEFESTIGUNGSANORDNUNG**
FASTENING DEVICE
SYSTEME DE FIXATION

(30) Priorität: 16.06.2003 AT 4172003 U
(43) Veröffentlichungstag der Anmeldung: 17.05.2006
(73) Patentinhaber: Heiss, Franz, 3382 Loosdorf (AT)
(72) Erfinder: Heiss, Franz, 3382 Loosdorf (AT)
(74) Vertreter: Büchel, Kurt F.
(86) Internationale Anmeldenummer: PCT/EP2004/051130
(87) Internationale Veröffentlichungsnummer: WO 2004/113737

(56) Entgegenhaltungen:
- GB-A- 2 006 297
- US-A- 4 797 983
- US-A- 5 499 884

## Beschreibung

### Technisches Umfeld

Die Erfindung betrifft eine Befestigungsanordnung zur kraftschlüssigen Positionierung eines mit einem Tiefenanschlag wie z.B. einem Flansch oder Kragen ausgebildeten Ankerstückes in einer Ausnehmung bzw. an einem Einsatzstück in der Ausnehmung, mit mindestens einem O-Ring in einer offenen Ringnut oder mindestens einem Ringwulst einerseits und mindestens einer Ausnehmung z.B. in Form einer Ringnut zur Aufnahme des O-Ringes oder Ringwulstes anderseits in entweder der Mantelfläche des Ankerstückes oder der Mantelfläche der Ausnehmung. Solch eine Befestigungsanordnung ist aus der GB 2006 297 A bekannt.

Unter Ankerstücken werden hier in die Ausnehmung versenkbare Bauteile verstanden, die die Ausnehmung verschließen und die gegebenenfalls Anschlussstücke wie etwa Scharnierteile oder Verbindungsteile z.B. im Bereich der Tischlerei tragen. Die Befestigung soll durch Stecken erfolgen und für einen sicheren Halt sorgen. Das Ankerstück kann auch ein Verschluss und die Ausnehmung eine Öffnung eines Behälters sein. In erster Linie ist an Topfbänder für Scharniere gedacht, bei denen der Scharniertopf heute mittels zweier Schrauben in der Ausnehmung z.B. eines Schrankkorpus befestigt wird.

Reibungsschlüssige Verbindungen sind bekannt. In diesem Sinn zählen auch Ankerstücke in Form von Pfropfen zum Stand der Technik, die außen an der Mantelfläche mit radial vorspringenden ringförmigen Lamellen ausgestattet sind. Diese legen sich an die Bohrungswand und bewirken einerseits eine Dichtung und wirken anderseits den Auszugkräften entgegen. Solche Pfropfen oder Ankerstücke sind somit sehr leicht in die Ausnehmung hineinzustecken, jedoch nur mit größerem Kraftaufwand zu entfernen.

### Offenbarung der Erfindung

### Technisches Problem

Es ist das Ziel der Erfindung, eine Befestigungsanordnung als Steckverbindung gemäß der einleitend beschriebenen Art zu schaffen, die nicht nur für Verschlüsse, sondern auch zur festen Verankerung von Bauteilen aneinander geeignet ist und die bloß in die Aus□nehmung hineingesteckt wird und dennoch sicher hält.

**Technische Lösung**

Dieses Ziel wird dadurch erreicht, dass die Mantelflächen in den Kegelwinkeln etwa übereinstimmende Kegelflächen sind und die Ringnut, in die ein gegenüberliegender O-Ring oder Ringwulst eingreift, in axialer Richtung tiefer liegt als der O-Ring oder die Ringwulst des am Anschlag z.B. Flansch anliegenden Ankerstückes. Infolge der ineinander schiebbaren Kegelflächen kommt es erst zu einem Reibungsschluss kurz vor Erreichen des Form- und Kraftschlusses. Dieser wirkt jedoch nicht bloß als Rastverbindung, sondern setzt eine Kraftkomponente frei, die das Ankerstück in die Ausnehmung hineinzieht, bis das Ankerstück mit seinem Flansch oder Kragen an einer Gegenfläche, z.B. nächst des Randes der Ausnehmung, anliegt. Die Abmessungen und Abstände sind so aufeinander abgestimmt, dass eine Restkraft beim Anliegen bestehen bleibt und für die feste Verbindung sorgt. Je nach der Wahl der radialen Abstände der Mantelflächen zueinander und des Durchmessers des O-Ringes oder des Ringwulstes kann die Befestigungsanordnung zu einer lösbaren oder fast unlösbaren Verbindung führen.

Eine besonders zweckmäßige Ausführungsform ist dadurch gekennzeichnet, dass auf den Mantelflächen am Ankerstück und in der Ausnehmung aneinander anschließende offene konzentrische Ringnuten vorgesehen sind, die bei in die Ausnehmung bis zum Anschlag eingeschobenem Ankerstück zueinander axial versetzt und aneinander mit Spiel gegenüberliegen, wobei die O-Ringe oder Ringwülste in die schräg gegenüber liegenden Ringnuten unter elastischer Verformung eindringen und eine Kraftkomponente im Sinne eines Andruckes an den Anschlag freisetzen. Dadurch wird der Effekt des Selbstspannens der Befestigung verstärkt.

Eine weitere Verbesserung kann dadurch erzielt werden, dass die Radien der Rillen der Ringnuten des Ankerstückes bei jeweils größeren Ringnutdurchmessem von Ringnut zu Ringnut größer sind und dass auch die O-Ringe zunehmend größere Kreisquerschnitte aufweisen.

Eine weitere Ausführungsform ist dadurch gekennzeichnet, dass das Ankerstück in den in seiner konischen Mantelfläche vorgesehenen offenen Ringnuten mit Ausnahme der Ringnut mit dem größten Durchmesser jeweils O-Ringe trägt, dass Rippen, die in der Ausnehmung zwischen den offenen Ringnuten hervorragen, zwischen die O-Ringe des Ankerstückes greifen und beim Eindrücken des Ankerstückes die O-Ringe in die Ringnut mit dem jeweils nächst größeren Durchmesser verdrängen, in welcher Position sie in die jeweils etwas tiefer angeordneten Ringnuten der Ausnehmung kraft- und formschlüssig eingreifen. Durch das Umspringen der O-Ringe werden Kräfte frei, die das Ankerstück in die Ausnehmung hineinziehen. Diese Kräfte wirken weiter, wenn der Tiefenanschlag erreicht ist. Dies setzt voraus, dass die Elemente der Befestigungsanordnung in ihrer relativen Lage zueinander von einer stabilen Grundstellung der O-Ringe ausgehend noch nicht die neutrale Endlage bezüglich der Ringnut erreicht haben, in die der O-Ring einschnappt. Der O-Ring oder die O-Ringe bzw. der elastische Ringwulst hat somit das Bestreben, vollständig in die gegenüberliegende Ringnut einzugreifen; er wird jedoch am Erreichen dieses kräfteneutralen Zustands durch den Anschlag gehindert.

Die Anordnung der Ringnuten, der O-Ringe und des oder der Ringwulste ist in technischer Umkehr natürlich jeweils auch auf dem anderen Element (Ankerstück oder Ausnehmung) möglich.

### Kurze Beschreibung von Zeichnungen

Ansführungsbeispiele des Erfindungsgegenstandes sind in den Zeichnungen dargestellt.

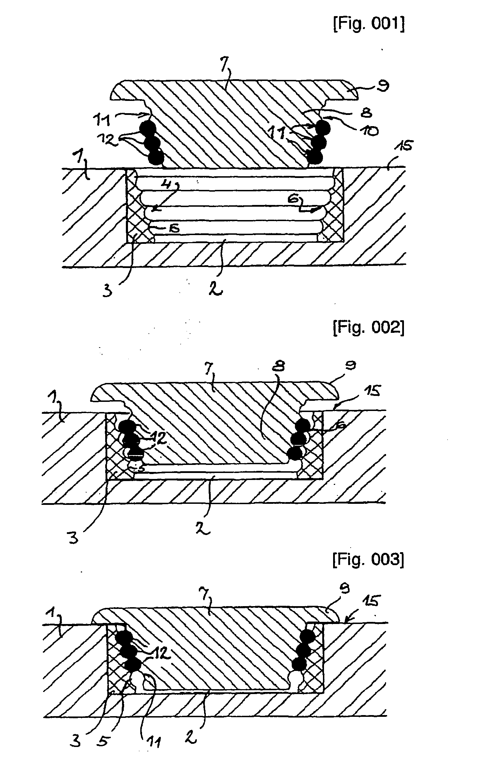

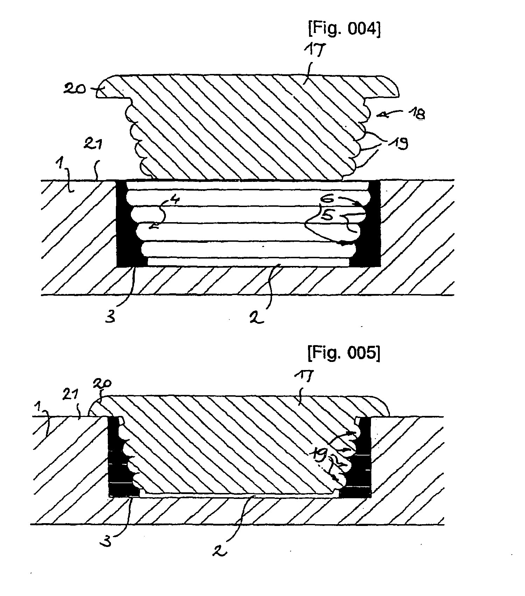

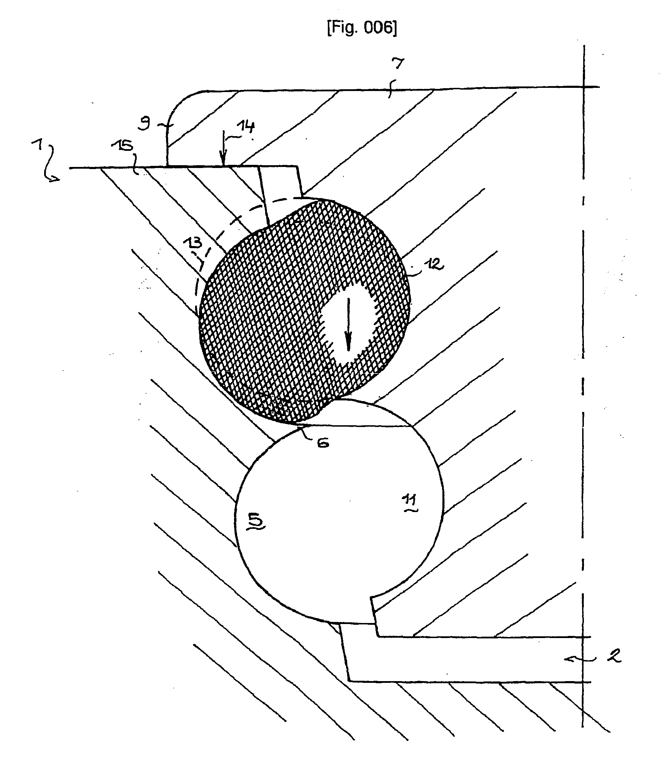

Fig. 1 zeigt ein Ankerstück vor dem Einsetzen in eine Ausnehmung im Querschnitt, Fig. 2 die Bauteile nach Fig. 1 beim Einsetzen, Fig. 3 die Bauteile nach Fig. 1 in der Befestigungsstellung, Fig. 4 ein anderes Ankerstück außerhalb einer Ausnehmung, Fig. 5 das Ankerstück nach Fig. 4 in der Befestigungsstellung und Fig. 6 eine allgemeine Darstellung zum Verständnis des Erfindungsgedankens.

Gemäß Fig. 1 ist in einer Holzplatte 1 eine Ausnehmung 2 in Form einer kreiszylindrischen Ausfräsung vorgesehen, in welcher ein Einsatzstück 3 unlösbar eingesetzt ist. Das Einsatzstück 3 weist eine innere Mantelfläche 4 in Kreiskegelform auf, in der offene Ringnuten 5 angeordnet sind. Der Übergang von Ringnut 5 zu Ringnut kann als scharfkantige oder abgerundete Rippe 6 ausgebildet sein.

Der Ausnehmung 2 liegt ein Ankerstück 7 gegenüber, das ebenso wie das Einsatzstück 3 aus Kunststoff gefertigt sein kann. Das Ankerstück 7 umfasst einen konischen Teil 8 sowie einen Flansch 9. In der konischen Mantelfläche 10 sind hier z.B. vier Ringnuten 11 vorgesehen, wobei in den drei unteren Ringnuten 11 jeweils O-Ringe 12 eingelegt sind. Die oberste der Ringnuten 11 trägt in Fig. 1 keinen O-Ring.

Die Geometrie des als Anschlag ausgebildeten Flansches 9 und die Lage der Ringnuten 5 und 11 dazu und zueinander ist in der vereinfachten Fig. 6 dargestellt. Dort sieht man, dass bei eingesetztem Ankerstück 7 die Ringnuten 5 und 11 einander nicht so gegenüber liegen, wie es die strichlierte Linie 13 zeigt, sondern dass die Ringnuten 5 und 11 zueinander versetzt sind. Die Ringnuten 5 und 11 liegen also nicht auf einer gemeinsamen Kreislinie. Dadurch müssen die O-Ringe 12 eine gespannte Lage in den zueinander versetzten Ringnuten 5 und 11 einnehmen und zwar derart, dass das Ankerstück 7 mit seinem Flansch 9 im Sinne des Pfeils 14 gegen die Anlagefläche 15 nächst der Ausnehmung 2 gepresst wird. Liegt der O-Ring 12 in Fig. 6 vor dem Einsetzen des Ankerstückes 7 in die Ausnehmung 2 in der unteren Ringnut 11, dann stößt der O-Ring 12 gegen die Rippe 6 und wird in die obere Ringnut 11 übergewälzt. Auch diese Reaktionskraft drückt das Ankerstück 7 in die Ausnehmung 2.

Gemäß Fig. 1 bis 3 wird dieser Vorgang noch dadurch verbessert, dass beim Einsetzen des Ankerstückes 7 (Fig. 2) die Rippen 6 die O-Ringe 12 jeweils um eine Ringnut 11 nach oben wälzen, sodass sich letztlich eine Lage nach Fig. 3 einstellt. Diese Drehung (Torsion) spannt die O-Ringe 12 so vor, dass sie das Ankerstück 7 in die Ausnehmung 2 hineinziehen. Diese Kraft bleibt bestehen, da vor Erreichen einer entspannten Lage (also z.B. einer kompletten Umdrehung) der Flansch 9 bereits an der Anlagefläche 15 liegt und ein weiteres Eindringen des Ankerstückes 7 verhindert. Das Ankerstück 7 wird somit gewissermaßen selbstspannend im Inneren der Ausnehmung gehalten (Fig. 3). Dazu kommt noch die Wirkung infolge der zueinander versetzten Ringnuten 5 und 11, wie dies Fig. 6 deutlich zeigt Eine Haltekraft wird dadurch aufgebracht. In den Fig. 4 und 5 ist in der Holzplatte 1 wieder eine Ausnehmung 2 mit Einsatzstück 3 und den Ringnuten 5 mit Stegen 6 in der konischen Mantelfläche 4 vorgesehen. Das Ankerstück 17 hingegen weist an seiner konischen Mantelfläche 18 eine Vielzahl von Ringwulsten 19 auf, deren Außenflächen etwa der Einhüllenden der O-Ringe 12 nach Fig. 1 bis 3 entspricht. Diese bleiben stationär und können nicht umspringen wie die O-Ringe 12 in den Fig. 1 bis 3. Es ergeben sich jedoch Kräfte gemäß Fig. 6 beim Einsetzen des Ankerstückes 17 in die Ausnehmung 2, wenn die Ringwulste 19 im eingesetzten Zustand des Ankerstückes 17 den Ringnuten 5 nicht unmittelbar gegenüber liegen. Liegen die Ringnuten 5 etwas tiefer, dann bewirkt die Verformung der aus elastischem Material gebildeten Ringwulste 19 eine Reaktionskraft in Richtung einer Vorspannung zwischen Ankerstück 17 bzw. Flansch 20 und Anlagefläche 21. Die für die selbstspannende Eigenschaft maßgebenden Kräfte können durch Wahl der Abmessungen, insbesondere der gegebenenfalls unterschiedlichen Durchmesser der O-Ringe, des Versatzes der Ringnuten zueinander und durch die Elastizität der Komponenten (Ankerstück 17, O-Ringe 12, Einsatzstück 3) eingestellt werden.

## Patentansprüche

1. Befestigungsanordnung zur kraftschlüssigen Positionierung eines mit einem Tiefenanschlag wie z.B. einem Flansch oder Kragen ausgebildeten Ankerstückes in einer Ausnehmung bzw. an einem Einsatzstück in der Ausnehmung, mit mindestens einem O-Ring in einer offenen Ringnut oder mindestens einem Ringwulst einerseits und mindestens einer Ausnehmung z.B. in Form einer Ringnut zur Aufnahme des O-Ringes oder Ringwulstes anderseits in entweder der Mantelfläche des Ankerstückes oder der Mantelfläche der Ausnehmung, **dadurch gekennzeichnet, dass** die Mantelflächen (4, 10,18) in den Kegelwinkeln etwa übereinstimmende Kegelflächen sind und die Ringnut (5), in die ein gegenüber liegender O-Ring (12) oder Ringwulst (19) eingreift, in axialer Richtung tiefer liegt als der O-Ring (12) oder die Ringwulst (19) des am Anschlag z.B. Flansch (9, 30) anliegenden Ankerstückes (7,17).

2. Befestigungsanordnung nach Anspruch 1, **dadurch gekennzeichnet, dass** auf den Mantelflächen (4, 10, 18) am Ankerstück (7,17) und in der Ausnehmung (2) aneinander anschließende offene konzentrische Ringnuten (5) vorgesehen sind, die bei in die Ausnehmung (2) bis zum Anschlag eingeschobenem Ankerstück (7, 17) zueinander axial versetzt und aneinander mit Spiel gegenüberliegen, wobei die O-Ringe (12) oder Ringwülste (19) in die schräg gegenüber liegenden Ringnuten (5) unter elastischer Verformung eindringen und eine Kraftkomponente (14) im Sinne eines Andruckes an den Anschlag freisetzen.

3. Befestigungsanordnung nach Anspruch 2, **dadurch gekennzeichnet, dass** die Radien der Rillen der Ringnuten (15, 11) des Ankerstückes (7,17) bei jeweils größeren Ringnutdurchmessem von Ringnut (5, 11) zu Ringnut (5,11) größer sind und dass auch die O-Ringe (12) zunehmend größere Kreisquerschnitte aufweisen.

4. Befestigungsanordnung nach den Ansprüchen 1 oder 2, **dadurch gekennzeichnet, dass** das Ankerstück (7) in den in seiner konischen Mantelfläche vorgesehenen offenen Ringnuten (11) mit Ausnahme der Ringnut mit dem größten Durchmesser jeweils O-Ringe (12) trägt, dass Rippen (6), die in der Ausnehmung (2) zwischen den offenen Ringnuten (5) hervorragen, zwischen die O-Ringe (12) des Ankerstückes (7) greifen und beim Eindrücken des Ankerstückes (7) die O-Ringe (12) in die Ringnut (11) mit dem jeweils nächst größeren Durchmesser verdrängen, in welcher Position sie in die jeweils etwas tiefer angeordneten Ringnuten (5) der Ausnehmung (2) kraft- und formschlüssig eingreifen.

## Claims

1. A fastening device for the non-positive positioning of an anchor piece formed with a depth stop such as a flange or yoke in a recess or on an insertion piece located in the recess, comprising at least one O-ring in an open annular groove or at least one annular ring on the one hand and at least one recess, e. g. in the form of an annular groove, for receiving the O-ring or annular ring on the other in either the curved surface of the anchor piece or the curved surface of the recess, **characterised in that** the curved surfaces (4, 10, 18) are conical surfaces whose cone angles are in substantial agreement and the annular groove (5) with which an opposite O-ring (12) or annular ring (19) engages is located at a lower level in the axial direction than the O-ring (12) or annular ring (19) of the anchor piece (7, 17) resting on the stop e.g. the flange (9, 30).

2. The fastening device according to claim 1, wherein adjacent open concentric annular grooves (5) are provided on the curved surfaces (4, 10, 18) of the anchor piece (7, 17) and in the recess (2) which, when the anchor piece (7, 17) has been inserted into the recess (2) until it reaches the stop, are opposite to each other in such a way that they are axially offset from each other and are adjacent to each other with a clearance, the O-rings (12) or annular rings (19) penetrating into the diagonally opposite annular grooves (5), while being elastically deformed, and releasing a force component (14) in the sense of a pressure against the stop.

3. The fastening device according to claim 2, wherein the radll of the channels of the annular grooves (15, 11) of the anchor piece (7, 17) increase for respectively larger annular groove diameters from annular groove (5, 11) to annular groove (5, 11) and the O-rings (12) also comprise increasingly larger circular cross-sections.

4. The fastening device according to claim 1 or 2, wherein the anchor piece (7) carries an O-ring (12) in each of the open annular grooves (11) provided in the conical curved surface of the anchor piece (7), except for the annular groove having the largest diameter, and that ribs (6) protruding in the recess (2) between the open annular grooves (5) engage between the O-rings (12) of the anchor piece (7) and, when the anchor piece (7) is pressed in, force the O-rings (12) into the annular groove (11) having the respectively next larger diameter, in which position they non-positively and positively engage with the annular grooves (5) of the recess (2) which are arranged at a respectively slightly lower level.

## Revendications

1. Dispositif de fixation pour le positionnement, accompagné d'un liaison à interaction de forces, d'une pièce d'ancrage, réalisée avec une butée en profondeur, telle que, par exemple, une bride ou une collerette, dans un évidement ou sur une pièce d'insert placée dans l'évidement, avec au moins un élément torique dans une gorge annulaire ouverte, ou au moins un bourrelet annulaire, d'une part, et au moins un évidement ayant par exemple la forme d'une gorge annulaire, devant recevoir l'élément torique ou le bourrelet annulaire, d'autre part, soit dans la surface d'enveloppe de la pièce d'ancrage, soit dans la surface d'enveloppe de l'évidement, **caractérisé en ce que** les surfaces d'enveloppe (4, 10, 10) sont des surfaces coniques qui coïncident à peu près au niveau des angles de cône, et que la gorge annulaire (5), dans laquelle s'engage un élément torique (12) ou un bourrelet annulaire (19) placé en regard, en direction axiale est située un peu plus profondément que l'élément torique (12) ou le bourrelet annulaire (19) de la pièce d'ancrage (7, 17) appuyant sur la butée, par exemple la bride (9, 30).

2. Dispositif de fixation selon la revendication 1, **caractérisé en ce que** sur les surfaces d'enveloppe (4, 10, 18), sur la pièce d'ancrage (7, 17) et dans l'évidement (2), sont prévues des gorges annulaires (5) concentriques ouvertes, se raccordant les unes aux autres, qui, pour la pièce d'ancrage (7, 17) introduite dans l'évidement (2) jusqu'à venir en butée, sont décalées axialement les unes par rapport aux autres et sont placées en regard les unes des autres avec du jeu, sachant que les éléments toriques (12) ou les bourrelets annulaires (19) pénètrent dans les gorges annulaires (5) placées en regard obliquement, ceci étant accompagné d'une déformation élastique, et produisent une composante de force (14) dans le sens d'un pressage sur la butée.

3. Dispositif de fixation selon la revendication 2, **caractérisé en ce que** les rayons des cannelures des gorges annulaires (15, 11) de 1d pièce d'ancrage (7, 17) augmentent, pour des diamètres de gorges annulaires devenant chaque fois plus grands, d'une gorge annulaire (5, 11) à une autre gorge annulaire (5, 11), et **en ce que**, également, les éléments toriques (12) présentent des sections transversales circulaires devenant de plus en plus grandes.

4. Dispositif de fixation selon la revendication 1 ou 2, **caractérisé en ce que** la pièce d'ancrage (7), dans les gorges annulaires (11) ouvertes prévues dans sa surface d'enveloppe conique, porte, à l'exception de la gorge annulaire ayant le diamètre maximal, chaque fois des éléments toriques (12), **en ce que** des nervures (6) ressortant de l'évidement (2) entre les gorges annulaires (5) ouvertes, s'engagent entre les éléments toriques (12) de la pièce d'ancrage (7) et, lors de l'enfoncement de la pièce d'ancrage (7), refoulent les éléments toriques (12) dans la gorge annulaire (11) ayant le diamètre chaque fois immédiatement supérieur, position à laquelle les éléments toriques s'engagent, avec une liaison à interaction de forces et à ajustement de formes, dans les gorges annulaires (5), disposées chaque fois un peu plus profondément, de l'évidement (2).
